# EUROPEAN PATENT APPLICATION

(11) **EP 4 851 811 A1**
(43) Date of publication of application: **09.12.2026**
(21) Application number: 26158038.5
(22) Date of filing: 12.02.2026
(51) Int. Cl.: G06F 12/02, G06F 3/06, G06F 12/0868

(54) **STORAGE SYSTEM INCLUDING STORAGE DEVICES PERFORMING OVERLAPPING INTERNAL MANAGEMENT OPERATIONS AND OPERATING METHOD THEREOF**

(30) Priority: 04.06.2025 KR 20250073048; 22.07.2025 KR 20250098785
(71) Applicant: Samsung Electronics Co., Ltd., Suwon-si, Gyeonggi-do 16677 (KR)
(72) Inventor: MIN, Pyoung-Woo, 16677 Suwon-si, Gyeonggi-do (KR); KIM, Jungyoung, 16677 Suwon-si, Gyeonggi-do (KR); KO, Seokmin, 16677 Suwon-si, Gyeonggi-do (KR); KANG, Minwoo, 16677 Suwon-si, Gyeonggi-do (KR)
(74) Representative: Kuhnen & Wacker Patent- und Rechtsanwaltsbüro PartG mbB

(57) **Abstract**

Example embodiments relate to a storage system. The storage system includes a first storage device (13) and a second storage device (14). The first storage device (13) is configured to determine whether to perform a first internal management operation associated with the first storage device (13), and perform the first internal management operation in response to determining to perform the first internal management operation, and the second storage device (14) is configured to receive first information that triggers an internal management operation of the second storage device (14) based on the first storage device (13) determining to perform the first internal management operation, and perform a second internal management operation at least partly in parallel with the first internal management operation in response to receiving the first information.

## Description

### BACKGROUND

The present disclosure relates to a storage system and an operating method thereof.

Semiconductor memories may be classified into volatile memory devices, in which stored data is lost when the power supply is cut off, such as static RAM (SRAM), dynamic RAM (DRAM), synchronous DRAM (SDRAM), etc., and non-volatile memory devices, which retain stored data even when the power supply is cut off, such as read-only memory (ROM), programmable ROM (PROM), electrically programmable ROM (EPROM), electrically erasable and programmable ROM (EEPROM), flash memory devices, phase-change RAM (PRAM), magnetic RAM (MRAM), resistive RAM (RRAM), ferroelectric RAM (FRAM), etc.

### SUMMARY

Some example embodiments of the present disclosure relate to a storage system and an operating method thereof for reducing latency within the system and/or improving the operating efficiency of the storage system.

Example embodiments of the present disclosure are not limited to the foregoing, and other example embodiments not mentioned may be clearly understood by those of ordinary skill in the art from the following description of the disclosure.

A storage system according to some example embodiments of the present disclosure includes a first storage device and a second storage device. The first storage device is configured to determine whether to perform a first internal management operation associated with the first storage device, and perform the first internal management operation in response to determining to perform the first internal management operation. The second storage device is configured to receive first information that triggers an internal management operation of the second storage device based on the first storage device determining to perform the first internal management operation, and perform a second internal management operation at least partly in parallel with the first internal management operation in response to receiving the first information.

An operating method of a storage system, according to some example embodiments of the present disclosure, includes determining, by a first storage device, whether to perform a first internal management operation associated with the first storage device, wherein the storage system comprising the first storage device and a second storage device, performing, by the first storage device, the first internal management operation in response to determining to perform the first internal management operation, receiving, by the second storage device, information that triggers an internal management operation of the second storage device in response to the first storage device determining to perform the first internal management operation, and performing, by the second storage device, a second internal management operation at least partly in parallel with the first internal management operation in response to receiving the information.

A storage system, according to some example embodiments of the present disclosure, includes a first storage device, a second storage device, and a host connected to the first storage device and the second storage device. The first storage device is configured to determine whether to perform a first internal management operation associated with the first storage device, and perform the first internal management operation in response to determining to perform the first internal management operation. The second storage device is configured to receive first information that triggers an internal management operation of the second storage device based on the first storage device determining to perform the first internal management operation, and perform a second internal management operation at least partly in parallel with the first internal management operation in response to receiving the first information.

According to some example embodiments of the present disclosure, while one storage device performs a first internal management operation, a second internal management operation may be performed in parallel in another storage device, thereby reducing or limiting a performance degradation of the system and/or improving processing efficiency.

According to some example embodiments of the present disclosure, while a metadata flush operation for improving data stability is performed, another internal management operation is performed in parallel by utilizing the idle time of another storage device, thereby reducing or limiting the performance degradation of the system and/or effectively improving the stability of data.

According to some example embodiments of the present disclosure, when a shortage of free blocks is detected, by performing garbage collection in one storage device and processing an internal management operation in parallel in another storage device, a write performance degradation or delay that may occur in the future may be limited or reduced in advance, and the responsiveness and/or throughput of the storage system may be maintained at a relatively higher level.

According to some example embodiments of the present disclosure, a defense code operation that proactively checks and recovers the reliability of data is performed using the idle time of the storage system, and in this process, another storage device also performs an internal management operation in parallel, so that the long-term data preservation reliability may be improved without affecting or impeding the availability of the system.

According to some example embodiments of the present disclosure, even if an uncorrectable error occurs during a read request from a host, a data recovery procedure (defense code execution) is initiated to limit or reduce data loss, and while the data recovery procedure is in progress, an internal management operation is performed in parallel in another storage device, thereby limiting or reducing the performance degradation of the system while responding to the error situation, and improving the resilience and/or reliability of the storage system.

According to some example embodiments of the present disclosure, by providing a signal line between storage devices for direct communication with reduced host intervention, the computational load and software overhead of the host may be reduced. In addition, the potential delay that may occur when passing through the host is reduced and the parallel operation between the two devices may be initiated relatively faster and more efficiently, thereby improving the responsiveness and performance of the storage system.

### BRIEF DESCRIPTION OF THE DRAWINGS

FIG. 1 is a block diagram illustrating a storage system according to some example embodiments.
FIG. 2 is a block diagram illustrating an example of a detailed structure of the host of FIG. 1.
FIG. 3 is a block diagram illustrating an implementation example of the storage device of FIG. 1.
FIG. 4 is a block diagram illustrating an implementation example of a storage system to which a UFS interface is applied.
FIG. 5 is a flowchart illustrating an operating method of a storage device according to some example embodiments.
FIG. 6 is a sequence diagram illustrating an operation of a storage system according to some example embodiments.
FIG. 7 is a flowchart illustrating a process in which the first storage device determines to perform a metadata flush operation in operation S610 of FIG. 6.
FIG. 8 is a sequence diagram illustrating a process in which a garbage collection operation is performed according to some example embodiments.
FIG. 9 is a diagram illustrating a structure of a response UPIU packet that may be used in operation S840 of FIG. 8.
FIG. 10 is a sequence diagram illustrating a process of executing a defense code according to some example embodiments of the present disclosure.
FIG. 11 is a sequence diagram illustrating a process of executing a defense code in response to a read fail according to some example embodiments of the present disclosure.
FIG. 12 is a diagram illustrating an example of a connection structure between storage devices in the storage system of FIG. 1.
FIG. 13 is a sequence diagram illustrating an operation of a storage system according to the connection structure of FIG. 12.
FIG. 14 is a sequence diagram illustrating a process in which a garbage collection operation is performed based on the connection structure of FIG. 12.
FIG. 15 is a sequence diagram illustrating a process of executing a defense code based on the connection structure of FIG. 12.
FIG. 16 is a sequence diagram illustrating a process of executing a defense code upon a read fail based on the connection structure of FIG. 12.
FIG. 17 is a block diagram illustrating a configuration of a storage system including three or more storage devices according to another embodiment of the present disclosure.

### DETAILED DESCRIPTION OF EXAMPLE EMBODIMENTS

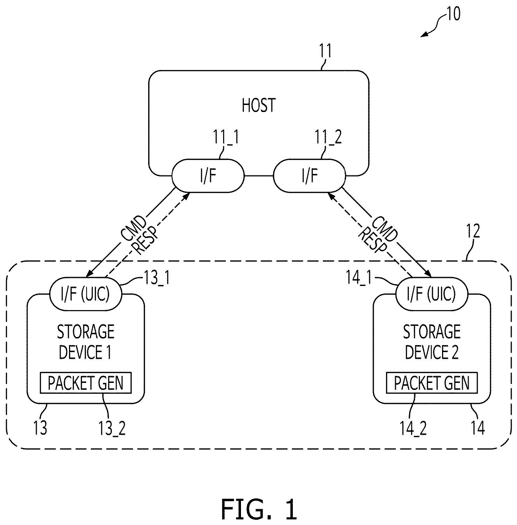

Hereinafter, some example embodiments of the present disclosure will be described with reference to FIG. 1 to FIG. 17. Throughout the specification, the same reference numerals may refer to the same constituent elements.

FIG. 1 is a block diagram illustrating a storage system according to some example embodiments.

Referring to FIG. 1, a storage system 10 may include a host 11 and one or more storage devices. For example, the storage system 10 may include a first storage device 13 and a second storage device 14. In some example embodiments, the first storage device 13 and the second storage device 14 may be implemented as different semiconductor chips and may be mounted in one memory package 12.

Each of the first and second storage devices 13 and 14 may include a memory controller and one or more memory devices (or, memory cores), and the memory controller may perform or grant or control access to the memory cores according to a request from the host 11. The memory controller and the memory device may be implemented as the same semiconductor chip, or may be implemented as different semiconductor chips. Each of the first storage device 13 and the second storage device 14 described above may also be referred to as a memory system in that each includes a memory controller and a memory device.

Regarding communication between the first storage device 13 and the second storage device 14 and the host 11, the storage system 10 may employ various types of interfaces. As an example, the storage system 10 may employ various interfaces such as universal serial bus (USB), multimedia card (MMC), embedded MMC (eMMC), peripheral component interconnection (PCI), PCI-express (PCI-E), advanced technology attachment (ATA), Serial-ATA, Parallel-ATA, small computer system interface (SCSI), enhanced small disk interface (ESDI), integrated drive electronics (IDE), FireWire, nonvolatile memory express (NVMe), universal flash storage (UFS), etc.

According to some example embodiments, the memory package 12 may be implemented as a memory embedded in or detachable from an electronic device. For example, the memory package 12 may be implemented in various forms such as an embedded UFS (universal flash storage) memory device, an embedded Multi-Media Card (eMMC), a solid state drive (SSD), a UFS memory card, a compact flash (CF), a secure digital (SD), a micro secure digital (Micro-SD), a mini secure digital (Mini-SD), an extreme digital (xD), or a memory stick.

In some example embodiments, the memory device of each of the first and second storage devices 13 and 14 may include a three-dimensional memory cell array, and the three-dimensional memory cell array may include a plurality of NAND strings, and each NAND string may include memory cells respectively connected to word lines stacked vertically on a substrate. In some example embodiments, the memory device of each of the first and second storage devices 13 and 14 may include a two-dimensional memory cell array, and the two-dimensional memory cell array may include a plurality of NAND strings arranged along row and column directions. In some example embodiments, the memory device of each of the first and second storage devices 13 and 14 may include a memory cell array including various types of non-volatile memory cells such as resistive RAM (ReRAM), phase change RAM (PRAM), or magnetic RAM (MRAM).

In some example embodiments of the present disclosure, it is assumed that the storage system 10 is based on a UFS interface, and the host 11 and the first and second storage devices 13 and 14 generate packets according to the protocol of the UFS interface and communicate with each other.

Each of the host 11 and the first and second storage devices 13 and 14 may include one or more interface circuits. The host 11 may include first and second host interface circuits 11_1 and 11_2. In addition, the first storage device 13 may include a first device interface circuit 13_1, and the second storage device 14 may include a second device interface circuit 14_1.

The host 11 may communicate with the first storage device 13 through the first host interface circuit 11_1, and may communicate with the second storage device 14 through the second host interface circuit 11_2. For example, the interface circuit provided in each of the host 11 and the first and second storage devices 13 and 14 may include a UFS Interconnection Layer (UIC) according to the UFS interface. In addition, the UIC may include a link layer such as UniPro defined by the MIPI alliance and a physical layer such as M-PHY.

The host 11 and the first and second storage devices 13 and 14 may communicate various types of UFS Protocol information units (UPIU) as packets according to the UFS interface, and the UPIU may include a command (CMD) UPIU and a response (RESP) UPIU. As an operation example, the host 11 may transmit a command UPIU to the first storage device 13 and the second storage device 14, and the first storage device 13 and the second storage device 14 may transmit a response UPIU to the host 11 in response thereto.

Each of the first and second storage devices 13 and 14 may include a packet generator, and each packet generator may generate a packet according to the UFS interface. As an example, a first packet generator 13_2 of the first storage device 13 and a second packet generator 14_2 of the second storage device 14 may each generate a response UPIU in response to a command UPIU from the host.

The storage system 10 may be a redundant array of independent disks (RAID) system, and each of the first storage device 13 and the second storage device 14 may include a non-volatile memory.

According to some example embodiments, apart from general data requests/responses with the host 11, a specific internal state of the first storage device 13 or a decision of the first storage device 13 may trigger an operation of the second storage device 14. For example, if the first storage device 13 decides to perform an internal management operation such as garbage collection, metadata flush, or defense code execution, based on this decision, the second storage device 14 may be triggered to perform an internal management operation in parallel with (or at least partly in parallel with) the internal management operation being performed by the first storage device 13. For the purposes of discussion herein, performing an operation in parallel with (or at least partly in parallel with) or variations thereof may refer to the first and second storage devices (or any additional storage devices) performing the respective internal management operations exactly at the same time as each other, or time duration of the internal management operation of one of the storage devices overlapping (or coinciding) at least part of the time duration of the internal management operation of the other of the storage devices.

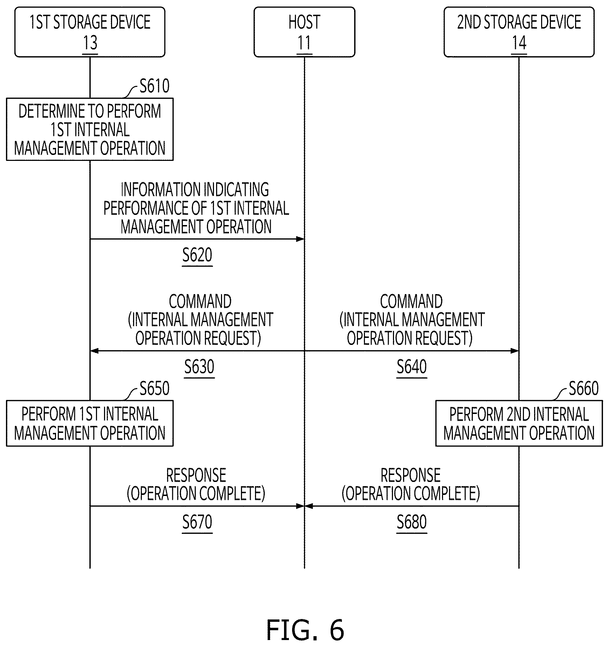

In some example embodiments, when the first storage device 13 transmits information indicating that the first storage device 13 has decided to perform an internal management operation to the host 11, the host 11 may trigger the internal management operation of the second storage device 14 by transmitting the received information or a command generated based on the information to the second storage device 14. This will be described with reference to FIG. 6 to FIG. 11.

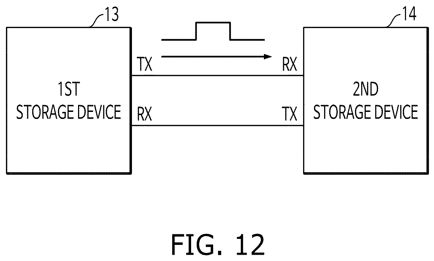

In some example embodiments, information indicating that the first storage device 13 has decided to perform an internal management operation may be directly transmitted from the first storage device 13 to the second storage device 14 through a signal transmission line provided between the first storage device 13 and the second storage device 14 without the intervention of the host 11, thereby triggering the internal management operation of the second storage device 14. This will be described in detail later with reference to FIG. 12 to FIG. 16.

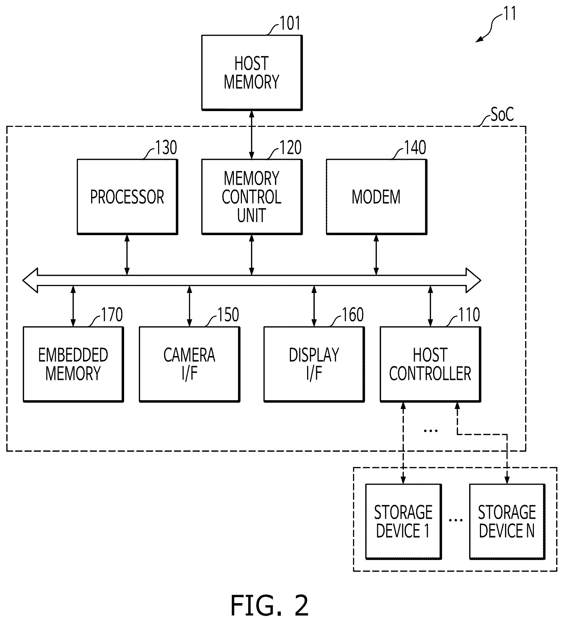

FIG. 2 is a block diagram illustrating an example structure of the host 11 of FIG. 1. In some example embodiments, FIG. 2 illustrates the host 11 that includes a system on chip (SoC) and a host memory 101, and a processor 130 controls memory operations by executing software stored in the host memory 101, but the host memory 101 may be provided inside the system on chip (SoC), or an embedded memory 170 may perform the function as the host memory 101. In addition, the system on chip (SoC) may be an application processor (AP).

Referring to FIG. 2, the system on chip (SoC) may include one or more modules as intellectual property (IP). As an example, the system on chip (SoC) may include a host controller 110, a memory control unit 120, a processor 130, a modem 140, a camera interface 150, a display interface 160, and an embedded memory 170. The system on chip (SoC) shown in FIG. 2 is an example, and some constituent elements included in the system on chip may be omitted or additional constituent elements may be included. As another example, the host controller 110 may be included in various types of SoCs including a modem, a graphics processing unit, a neural network processing unit, etc., in addition to the SoC disclosed in FIG. 2. As yet another example, the host controller 110 may be included outside the SoC, for example, in a general host system.

The processor 130 may control the overall operation of the system on chip (SoC). As an example, software (e.g., a host application and a device driver) for managing data write/read operations, etc., for a storage device is loaded into a host memory 101, and the processor 130 may manage the data write/read operations, etc., by executing the software. The host memory 101 may be implemented as a volatile memory or a non-volatile memory, and as an example, may include a volatile memory such as dynamic random access memory (DRAM) and/or static random access memory (SRAM).

According to some example embodiments, the system on chip (SoC) may include a modem 140, a camera interface 150, and a display interface 160, etc., and thereby may perform camera control operations, display control operations, and communication operations, etc. In FIG. 2, as the modem 140 is included in the system on chip (SoC) corresponding to an application processor, the system on chip (SoC) may be referred to as a ModAP.

The host controller 110 may transmit and receive packets to and from a storage device according to some example embodiments described above. The host controller 110 may generate a packet according to a predetermined, desired, or given interface in response to an access request generated from a host application layer of the system on chip (SoC) and may communicate the packet with a plurality of storage devices. The memory package in some example embodiments of the present disclosure may include first to N-th storage devices (where N is an integer of 2 or more), and the host controller 110 may include N interface circuits (e.g., UFS Interconnection Layer (UIC)) corresponding to the first to N-th storage devices.

According to some example embodiments of the present disclosure, the host 11 may coordinate internal management operations between storage devices. For example, software such as a device driver executed by the processor 130 may be implemented to receive a notification from a specific storage device (e.g., a first storage device) that an internal management operation (e.g., garbage collection) is necessary. This notification may be delivered through a field of a response packet.

When the processor 130 recognizes such a notification, the processor 130 may control the host controller 110 to generate and transmit a new command packet requesting the performance of a parallel internal management operation to another storage device (e.g., a second storage device). The host controller 110 may perform the function of a coordinator that forwards requests from a host application and receives feedback on the internal state of a storage device to schedule and manage background tasks for optimizing the performance and stability of the system (e.g., the entire system.

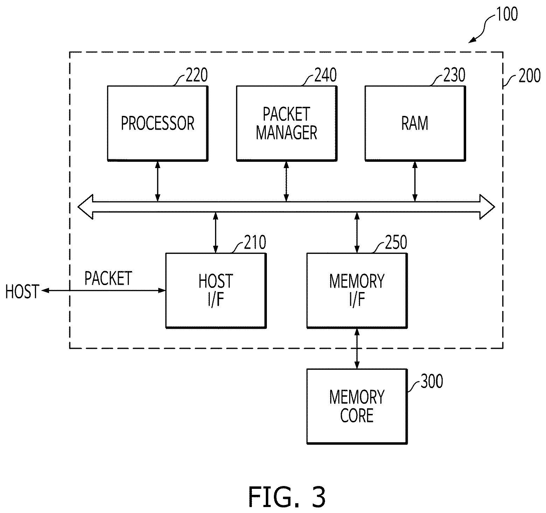

FIG. 3 is a block diagram illustrating an implementation of the storage device of FIG. 1, according to some example embodiments. A storage device 100 of FIG. 3 may correspond to each of the first storage device 13 and the second storage device 14 of FIG. 1.

Referring to FIG. 3, the storage device 100 may include a memory controller 200 and a memory core 300. The memory controller 200 may include a host interface 210, a processor 220, a RAM 230, a packet manager 240, and a memory interface 250.

The RAM 230 may be used as a working memory, and the processor 220 may control the overall operation of the memory controller 200 by executing firmware loaded into the RAM 230. The RAM 230 may be implemented with various memories, for example, may be implemented with at least one of resistive memory devices such as a cache memory, DRAM, SRAM, and phase change RAM (PRAM). As an example of firmware, a flash translation layer (FTL) may be loaded into the RAM 230, and various functions related to flash memory operations may be performed by driving the flash translation layer (FTL).

The host interface 210 may communicate with a host through the various types of interfaces described above. The host interface 210 may transmit a packet to the host and receive a packet from the host.

The packet manager 240 may generate a packet to be transmitted to a host according to a predetermined, desired, or given interface protocol, or may extract information from a packet received from the host.

The memory interface 250 may provide a physical connection between the memory controller 200 and the memory core 300. For example, the memory controller 200 may generate a command/address and a control signal for controlling a memory operation, and may provide them to the memory core 300 through the memory interface 250. In addition, write data and/or read data from a memory operation may be transmitted and received between the memory controller 200 and the memory core 300 through the memory interface 250.

In some example embodiments of the present disclosure, the constituent elements of the memory controller 200 may enable parallel operations between storage devices (e.g., the first storage device 13 or the second storage device 14 of FIG. 1). For example, the processor 220 may periodically and/or upon the occurrence of a desired or given event monitor the internal state of the device, such as the size of metadata stored in the RAM 230 or the number of free blocks (e.g., available blocks) in the memory core 300. Through this, the processor 220 may determine when an internal management operation such as metadata flush, garbage collection, or defense code execution is performed.

If it is determined to perform an internal management operation, the processor 220 may control the packet manager 240 so that information indicating that the processor 220 has decided to perform the internal management operation is transmitted to another storage device. In some example embodiments discussed with reference to FIG. 6 to FIG. 11, the information may be transmitted to another storage device via a host. In another example, in the device-to-device direct communication method to be described later with reference to FIG. 12 to FIG. 16, the information may be directly transmitted to another storage device through a control pulse or signal. The other storage device that received the information may perform an internal management operation in parallel with the storage device that transmitted the information.

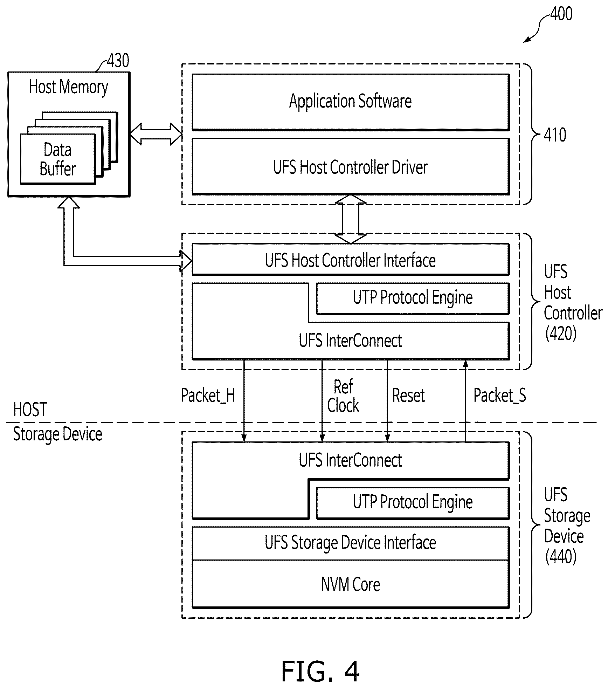

FIG. 4 is a block diagram illustrating an implementation example of a storage system including a UFS interface. A storage system 400 of FIG. 4 may correspond to the storage system 10 of FIG. 1.

Referring to FIG. 4, a host of the storage system 400 may be referred to as a UFS host, and a storage device of the storage system 400 may be referred to as a UFS storage device. The host of the storage system 400 may correspond to the host 11 of FIG. 1, and a UFS storage device 440 of the storage system 400 may correspond to each of the first storage device 13 and the second storage device 14 of FIG. 1.

The UFS host may include a software module 410, a UFS host controller 420 corresponding to a hardware module, and a host memory 430 as its constituent elements. The software module 410 may include application software and a UFS host controller driver. The application software may be various application programs executed on the UFS host, and the UFS host controller driver is for managing the driving of peripheral devices connected to and used by the UFS host, and data management operations such as data writing and reading to and from a storage device may be performed by executing the UFS host controller driver. The application software and the UFS host controller driver may be loaded into the host memory 430 shown in FIG. 4, or may be loaded into another operating memory within the UFS host and executed by a processor.

The UFS host controller 420 may correspond to the host controller 110 shown in FIG. 2, and may include a UFS host controller interface (UFS HCI), a UTP protocol engine, and a UFS interconnect layer (UIC). The UFS host controller interface (UFS HCI) may receive a request generated through the UFS host controller driver and transfer the request to the UTP protocol engine, or may provide a data access result transferred from the UTP protocol engine to the UFS host controller driver. The UTP protocol engine may provide services for an upper layer (or, an application layer), and as an example, may generate a packet or extract information from a packet.

The UFS interconnect layer of the UFS host controller 420 may communicate with the UFS storage device 440, and as an example, the UFS interconnect layer may include a Link Layer and a PHY Layer. The Link Layer may be MIPI UniPro, and the PHY Layer may be MIPI M-PHY. In addition, according to the UFS interface, the UFS host may provide a reference clock (Ref Clock) and a reset signal (Reset) to the UFS storage device 440.

Meanwhile, the UFS storage device 440 may include a memory controller and a memory core. According to some example embodiments, in the UFS interface, the memory controller may be referred to as a storage controller, and the memory controller may include a UFS interconnect layer, a UTP protocol engine, and a UFS storage device interface. In addition, the memory core may include a non-volatile memory core (NVM Core).

In a first packet (Packet_H) that the UFS host transmits to the UFS storage device 440 and a second packet (Packet_S) that the UFS storage device 440 transmits to the UFS host, a command or a response according to some example embodiments may be included. The UFS interface may utilize different types of packets. A packet according to the UFS interface may be defined as a UPIU, and as its types, packets such as a Command UPIU for write and read requests, a Response UPIU, a DATA IN UPIU including read data, a DATA OUT UPIU including write data, a Task Management Request UPIU, a Task Management Response UPIU, a Query Request UPIU, a Query Response UPIU, and a Ready To Transfer (RTT) UPIU may be defined.

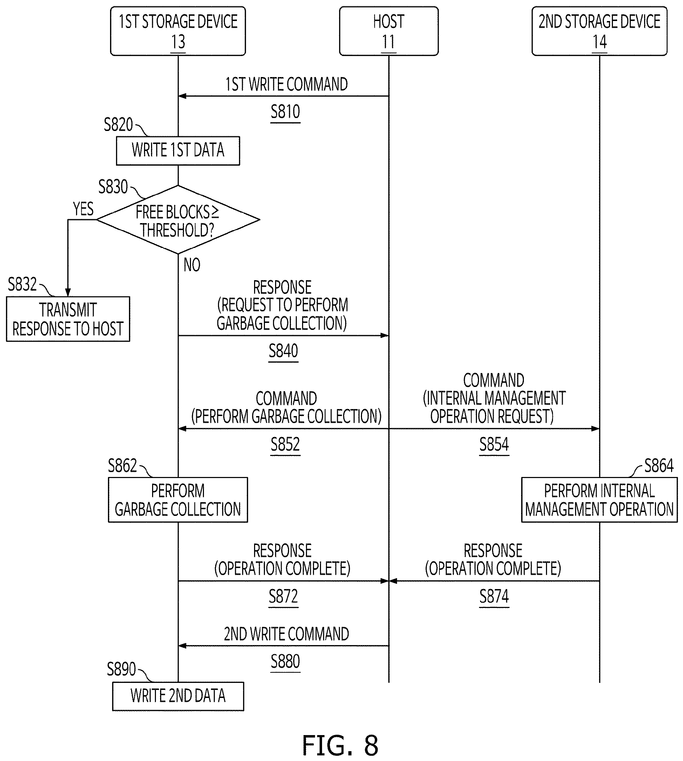

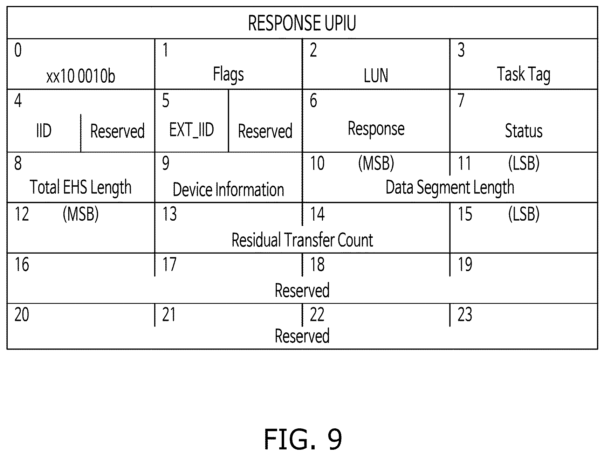

In a UFS interface environment, the exchange of information for parallel execution of internal management operations between storage devices according to some example embodiments of the present disclosure may be implemented using packets of the standard UFS protocol. For example, when one storage device notifies a host that an internal management operation is being or to be performed, this information may be transmitted included in a standard Response UPIU. When transmitting a response UPIU for a write command from the host, a predetermined, or desired to given value indicating state information such as 'garbage collection needed' may be recorded in a reserved field in the standard specification and transmitted. This will be described with reference to FIG. 8 and FIG. 9.

The UTP protocol engine of the UFS host controller 420 may receive such a response UPIU and parse the reserved field to recognize the internal state of the storage device. Thereafter, under the control of the UFS host controller driver of the software module 410, the UTP protocol engine may generate and transmit a new command UPIU to request the parallel execution of an internal management operation to another storage device. This command UPIU may be a command of a standard specification, or may be a vendor-specific command UPIU defined for a specific function.

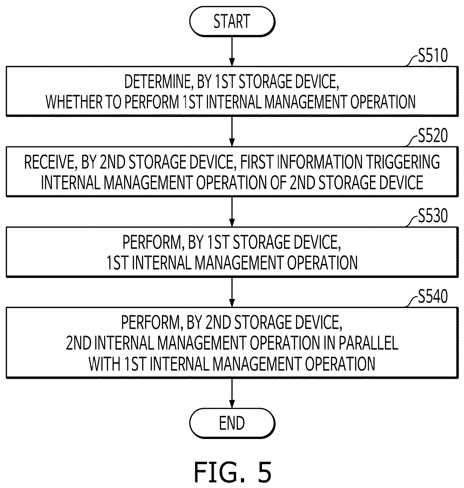

FIG. 5 is a flowchart illustrating an operating method of a storage device according to some example embodiments. Hereinafter, the operating method of FIG. 5 will be described with reference to FIG. 1 to FIG. 4, but this is merely an example, and the operating method of FIG. 5 may be performed in a system with a different structure. It is understood that additional operations can be provided before, during, and after the operations in FIG. 5, and some of the operations described below can be replaced or eliminated, for additional embodiments of the operation. The order of the operations or processes may be interchangeable, or two or more operations can be performed simultaneously.

Referring to FIG. 1 and FIG. 5, the first storage device 13 may determine whether to perform a first internal management operation associated with the first storage device 13 (S510). The first internal management operation may be a background operation performed to maintain the reliability and/or performance of the storage device. For example, the first internal management operation may include garbage collection, wear leveling, metadata flush, defense code execution, bad block management, data scrubbing, and/or metadata refresh operations, etc. A processor (e.g., the processor 220 of FIG. 3) of the first storage device 13 may determine whether to perform the first internal management operation either in response to receiving a command from the host 11 or independently without a separate command from the host 11, by assessing by itself whether the storage device is in an idle state, the degree of fragmentation of internal data, or whether specific conditions are met.

If the first storage device 13 decides to perform the first internal management operation, the second storage device 14 may receive first information that triggers an internal management operation of the second storage device 14 based on the first storage device 13 determining to perform the first internal management operation (S520). The first information may be generated in the first storage device 13 and delivered to the second storage device 14 via the host 11, or may be delivered directly from the first storage device 13 to the second storage device 14. The first information may include the type of the first internal management operation, an estimated time required, priority, and/or parameter information related to the first internal management operation, etc.

The first storage device 13 may perform the first internal management operation (S530). The second storage device 14 that received the first information may perform a second internal management operation in parallel with at least a portion of the first internal management operation (S540). The fact that the first internal management operation and the second internal management operation are performed in parallel may mean that the performance period of the first internal management operation and the performance period of the second internal management operation overlap at least in part. Through this, while one storage device performs an internal management operation, the idle resources of another storage device can be efficiently utilized to reduce or limit performance degradation of the system (e.g., the entire system) and increase or improve processing efficiency.

In some example embodiments, the second internal management operation performed by the second storage device 14 in operation S540 may include at least one of garbage collection, wear leveling, metadata flush, defense code execution, bad block management, data scrubbing, or metadata refresh operation for the second storage device 14.

The second storage device 14 may determine the type and/or number of second internal management operations to be performed by the second storage device 14, based on information about the type of the first internal management operation. For example, if the second storage device 14 recognizes through the first information that the first internal management operation performed by the first storage device 13 is garbage collection, which takes a relatively long time, the second storage device 14 may likewise decide to perform garbage collection, thereby increasing the time during which the internal management operations are executed in parallel. As another example, if the first internal management operation is data scrubbing, the second storage device 14 may decide to perform a metadata flush operation to align the consistency of related metadata.

In some example embodiments, the second storage device 14, in response to receiving the first information in operation S520, may perform the second internal management operation in parallel with at least a portion of the first internal management operation after an operation being executed by the second storage device 14 is completed. For example, if the second storage device 14 was processing a read or write request from the host 11, the second storage device 14 may initiate the second internal management operation after completing processing for the request to reduce or limit response delays for host requests.

Alternatively, the order of the operations shown in FIG. 5 may be changed. For example, after deciding to perform the first internal management operation (S510), the first storage device 13 may initiate the first internal management operation first (S530) without first transmitting the first information to the second storage device 14. Then, during the performance of the first internal management operation, the first storage device 13 may transmit the first information to the second storage device 14, enabling the second storage device 14 to receive it (S520) and perform the second internal management operation in parallel (S540).

FIG. 6 is a sequence diagram illustrating an operation of a storage system according to some example embodiments of the present disclosure. FIG. 6 may show an example of a case where a host intervenes in the parallel execution of internal management operations between storage devices as an example of the operating method shown in FIG. 5. It is understood that additional operations can be provided before, during, and after the operations in FIG. 6, and some of the operations described below can be replaced or eliminated, for additional embodiments of the operation. The order of the operations or processes may be interchangeable, or two or more operations can be performed simultaneously.

The first storage device 13 may decide to perform a first internal management operation according to an internal judgment (S610). Operation S610 of FIG. 6 may correspond to operation S510 of FIG. 5.

The first storage device 13, based on determining to perform the first internal management operation in operation S610, may transmit information indicating the decision to perform the first internal management operation to the host 11 (S620). The information transmitted by the first storage device 13 to the host 11 in operation S620 may function as a signal to notify the host 11 that the first storage device 13 is ready to perform a desired or given internal management operation, thereby requesting coordination of related operations. The information transmitted by the first storage device 13 to the host 11 in operation S620 may be transmitted in the form of a vendor-specific command or a UFS Protocol Information Unit (UPIU) in a UFS interface environment.

The host 11, based on receiving the information transmitted by the first storage device 13 in operation S620, may transmit a first command requesting the first storage device 13 to perform the first internal management operation to the first storage device 13 (S630).

The host 11, based on receiving the information transmitted by the first storage device 13 in operation S620, may transmit a second command requesting to perform a second internal management operation to the second storage device 14 (S640).

In operations S630 and S640, the host 11 may transmit the first command and the second command to the first storage device 13 and the second storage device 14 sequentially, or simultaneously (or, substantially simultaneously). The order in which the host 11 transmits the first command and the second command in operations S630 and S640 may be flexibly determined according to the scheduling policy of the host 11 or the system situation.

The second command may include information that triggers the internal management operation of the second storage device 14. The second command may include information about the type of the first internal management operation, etc., and may trigger the second storage device 14 to select and perform the type of the second internal management operation in conjunction therewith.

The first storage device 13, based on receiving the first command in operation S630, may perform the first internal management operation (S650).

The second storage device 14, based on receiving the second command in operation S640, may perform the second internal management operation (S660). The first internal management operation (S650) and the second internal management operation (S660) may be performed in parallel in at least some sections to reduce the idle time of the system and improve the overall processing efficiency.

The first storage device 13, in response to completing the first internal management operation, may transmit a first response notifying the completion of the first internal management operation to the host 11 (S670). The second storage device 14, in response to completing the second internal management operation, may transmit a second response notifying the completion of the second internal management operation to the host 11 (S680). The host 11, by receiving the responses in operations S670 and S680, recognizes that each storage device 13 and 14 has finished the background operation and returned to a state where the storage devices can process normal data input/output requests, and can manage system resources for subsequent tasks.

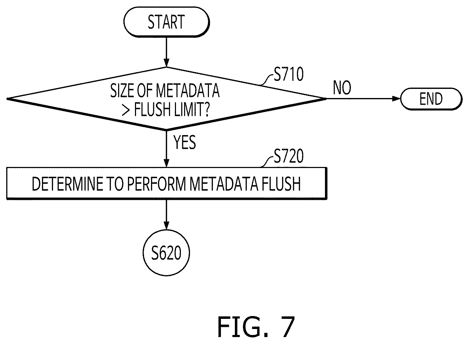

FIG. 7 is a flowchart illustrating a process in which the first storage device determines to perform a metadata flush operation in operation S610 of FIG. 6.

The first storage device 13 may include a volatile memory (e.g., RAM 230 of FIG. 3) and a non-volatile memory (e.g., memory core 300 of FIG. 3). The first storage device 13 may store metadata that maps a logical address associated with the first storage device 13 to a physical address of the first storage device 13 in the volatile memory. For example, the metadata may be an address mapping table of a flash translation layer (FTL), and may be maintained in the form of a cache on the volatile memory during operation for fast data access.

The first storage device 13 may determine whether to perform the first internal management operation by determining whether the size of the metadata stored in the volatile memory exceeds a flush limit managed by the first storage device 13 (S710). The flush limit may be a predetermined, desired, or given value that may be constant (e.g., non-variable) or a dynamically adjusted value according to the capacity of the volatile memory, the load state of the system, data stability policy, etc.

If it is determined that the size of the metadata stored in the volatile memory exceeds the flush limit (the 'YES' branch of S710), the first storage device 13 may decide to perform an internal management operation (S720). In this case, the first internal management operation may include a metadata flush operation of flushing the metadata stored in the volatile memory to the non-volatile memory. In contrast, if it is determined that the size of the metadata stored in the volatile memory does not exceed the flush limit (the 'NO' branch of S710), the first storage device 13 may decide not to perform the internal management operation.

Referring to FIG. 6 and FIG. 7, after deciding to perform the metadata flush operation in operation S720, the first storage device 13 may transmit information indicating the decision to perform the first internal management operation to the host 11 (S620). The subsequent signal flow may lead to a process in which the first and second storage devices 13 and 14 perform at least a part of their respective internal management operations in parallel under the coordination of the host 11, as described with reference to FIG. 6.

According to some example embodiments described above with reference to FIG. 7, by utilizing the idle time that occurs while the first storage device performs a metadata flush operation, the second storage device performs another internal management operation (e.g., garbage collection or its own metadata flush, etc.) in parallel, so that data stability can be secured while minimizing the performance degradation of the system (e.g., the entire system).

FIG. 8 is a sequence diagram illustrating a process in which a garbage collection operation is performed according to some example embodiments of the present disclosure. FIG. 9 is a diagram illustrating a structure of a response UPIU packet that may be used in operation S840 of FIG. 8. Example embodiments described with reference to FIG. 8 may be an example for the garbage collection operation described with reference to FIG. 6.

Referring to FIG. 8, the host 11 may transmit a first write command for writing data to the first storage device 13 to the first storage device 13 (S810). The first storage device 13 receives the first write command, writes first data (S820), and may determine whether the number of free blocks in the first storage device 13 is greater than or equal to a threshold value (e.g., a predetermined, desired, or given number) (S830). A free block may refer to a block where new data can be immediately written without an additional erase operation. The threshold value of operation S830 may correspond to the minimum number of free blocks that are desired to be available for the first storage device 13 to perform a write operation by a subsequent write command.

As a result of the determination in operation S830, if the number of free blocks is greater than or equal to the threshold value (the 'YES' branch of operation S830), the first storage device 13 may transmit a response to the host 11 indicating that the write operation has been completed normally (S832).

On the other hand, if it is determined that the number of free blocks is less than the threshold value (the 'NO' branch of operation S830), the first storage device 13, based on completing the writing of the first data in operation S820, may transmit a response to the host 11 that includes a request to perform garbage collection and corresponds to the first write command (S840). Operation S840 of FIG. 8 may correspond to operation S620 of FIG. 6. Alternatively, the first storage device 13 may sequentially transmit the information that garbage collection may be performed and the response corresponding to the first write command.

Referring to FIG. 8 and FIG. 9, the first storage device 13 may deliver the information that garbage collection is desired in operation S840 to the host 11 by including it in a given field within the RESPONSE UPIU shown in FIG. 9.

The response UPIU of FIG. 9 may include a transaction code (byte 0) that identifies the transaction type as a Response, a Flags field (byte 1) for conveying additional status information, a Logical Unit Number (LUN) field (byte 2), a Task Tag field (byte 3) for identifying the processed command task, an Initiator ID (IID) field (byte 4) for identifying the initiator, an Extended Initiator ID (EXT_IID) field (byte 5), a Response field (byte 6) indicating the overall response result, a Status field (byte 7) indicating the success or failure status of the command execution, a field (byte 8) indicating the length of the Total EHS (End-to-end Header Segment), a Device Information field (byte 9) including device-related information, a Data Segment Length field (bytes 10-11) specifying the length of the data segment, and a Residual Transfer Count field (bytes 12-15) indicating the number of un-transmitted remaining data bytes.

According to a pre-defined (or given) protocol between the host 11 and the storage device 13, a 'garbage collection to be performed' state may be indicated using a bit or code in a reserved field (e.g., bytes 16-17) of the standard specification. The host 11 may receive the response UPIU and check the corresponding reserved field to recognize that garbage collection is desired in the first storage device 13 along with the completion of the write operation.

Referring again to FIG. 8, the host 11, based on receiving the response of operation S840, transmits a first command requesting performing of garbage collection to the first storage device 13 (S852), and may transmit a second command for requesting an internal management operation to the second storage device 14 (S854). Operation S852 and operation S854 of FIG. 8 may correspond to operation S630 and operation S640 of FIG. 6.

The first storage device 13 performs garbage collection based on receiving the first command (S862), and the second storage device 14 may perform at least a portion of a second internal management operation at least partly in parallel with the garbage collection of the first storage device 13 based on receiving the second command (S864). Operation S862 and operation S864 of FIG. 8 may correspond to operation S650 and operation S660 of FIG. 6.

When the first storage device 13 and the second storage device 14 complete their operations, they may each transmit a completion response to the host 11 (S872, S874). Operation S872 and operation S874 of FIG. 8 may correspond to operation S670 and operation S680 of FIG. 6.

After all internal management operations are completed, the host 11 may recognize that sufficient free blocks have been secured in the first storage device 13, and may transmit a subsequent second write command (S880), and the first storage device 13 may write second data based on the second write command (S890). As garbage collection is performed in operation S862, a sufficient, or desired to given number of free blocks may be obtained to write the second data in operation S890.

According to some example embodiments, when a shortage of free blocks is detected during a write operation, the first storage device 13 informs (e.g., immediately) the host 11 of the shortage of free blocks and performs proactive garbage collection, thereby reducing or limiting future write latency in advance and maintaining the responsiveness and/or throughput of the storage system at a relatively higher level.

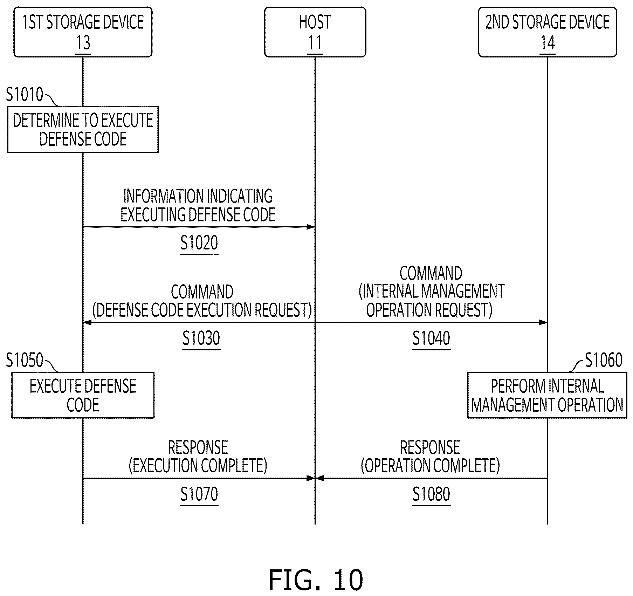

FIG. 10 is a sequence diagram illustrating a process of executing a defense code according to some example embodiments of the present disclosure. Example embodiments described with reference to FIG. 10 may be an example of the defense code execution operation described with reference to FIG. 6. It is understood that additional operations can be provided before, during, and after the operations in FIG. 10, and some of the operations described below can be replaced or eliminated, for additional embodiments of the operation. The order of the operations/processes may be interchangeable, or two or more operations can be performed simultaneously

First, the first storage device 13 may decide to execute a defense code (S1010). The decision to execute the defense code in operation S1010 may be made based on the first storage device 13 being in an idle state. For example, the idle state may mean a state where no new command has been received from the host 11 for a certain period of time or an internal work queue is empty. The first storage device 13 may use the time in the idle state to perform tasks to check and reinforce the reliability of stored data. Operation S1010 of FIG. 10 may correspond to operation S610 of FIG. 6.

If it is decided to execute the defense code in operation S1010, the first storage device 13 may transmit information indicating the execution of the defense code to the host 11 (S1020). Operation S1020 of FIG. 10 may correspond to operation S620 of FIG. 6.

The host 11, based on the information received from the first storage device 13 in operation S1020, transmits a first command requesting the execution of the defense code to the first storage device 13 (S1030), and may transmit a second command requesting the performance of a parallel internal management operation to the second storage device 14 (S1040). Operation S1030 of FIG. 10 may correspond to operation S630 of FIG. 6, and operation S1040 of FIG. 10 may correspond to operation S640 of FIG. 6.

The first storage device 13 performs an operation of executing a defense code as a first internal management operation in response to the first command (S1050), and in operation S1060, the second storage device 14 may perform at least a part of a second internal management operation in parallel with at least a part of the operation in which the first storage device 13 executes the defense code in operation S1050. Operation S1050 of FIG. 10 may correspond to operation S650 of FIG. 6, and operation S1060 of FIG. 10 may correspond to operation S660 of FIG. 6.

In some example embodiments, the defense code execution operation of operation S1050 may include several sub-operations.

For example, the defense code execution operation may include a first operation of performing a read operation on a first memory cell of the first storage device 13. The first operation may be an operation similar to 'data scrubbing' or 'patrol read', which may be a process of periodically (or at desired intervals) reading data to detect in advance a data retention error that may occur because a user has not accessed the data for a long time.

The defense code execution operation may include a second operation of checking for an error included in first data read by the read operation of the first operation. The error check may be performed through an error correction code (ECC) engine, and it may be determined whether a correctable level of bit error has occurred.

If an error is found in the first data, the operation of executing the defense code may include a third operation of generating second data in which the error of the first data is corrected, and writing the corrected second data to a second memory cell of the first storage device 13. Through this, the data is recovered before more errors accumulate and become uncorrectable, thereby securing the long-term reliability of the stored data.

The first and second storage devices 13 and 14, when the operations of operations S1050 and S1060 are completed, may transmit a response to the host 11 notifying the completion of the operation execution (S1070, S1080). Operation S1070 of FIG. 10 may correspond to operation S670 of FIG. 6, and operation S1080 of FIG. 10 may correspond to operation S680 of FIG. 6.

According to some example embodiments described above with reference to FIG. 10, a defense operation that proactively inspects and recovers the integrity of data can be performed by utilizing the idle time of the system. While one storage device performs a data reliability assurance task, another storage device also performs another internal management operation in parallel, thereby improving the stability and reliability of stored data and maintaining the availability of the entire system (e.g., the entire system).

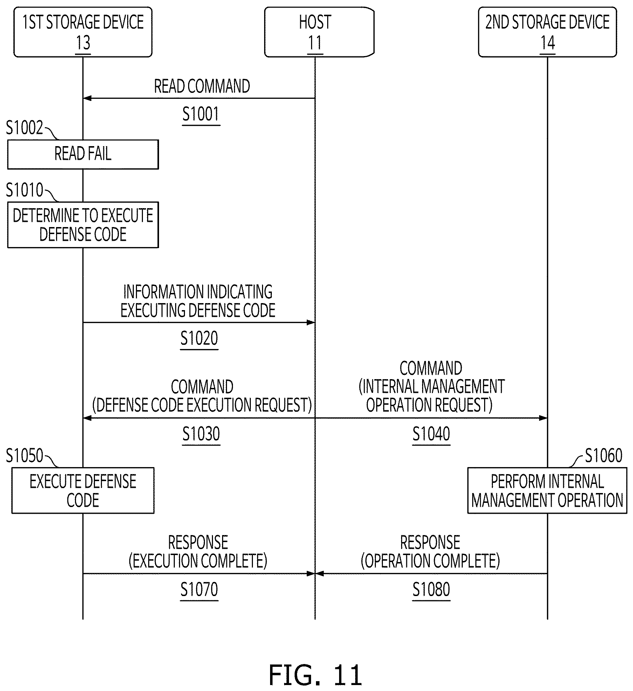

FIG. 11 is a sequence diagram illustrating a process of executing a defense code in response to a read fail according to some example embodiments of the present disclosure. Hereinafter, contents that overlap with the description given with reference to FIG. 10 are omitted. The sequence diagram of FIG. 11 may be same as or similar in some respects to the sequence diagram of FIG. 10, and therefore may be best understood with reference thereto. It is understood that additional operations can be provided before, during, and after the operations in FIG. 11, and some of the operations described below can be replaced or eliminated, for additional embodiments of the operation. The order of the operations/processes may be interchangeable, or two or more operations can be performed simultaneously

The host 11 may transmit a read command to read desired data stored in the first storage device 13 (S1001).

The first storage device 13 performed a read operation based on the read command of operation S1001, but the read operation may fail (S1002) or the read operation may be performed undesirably. For example, when requesting to read data stored in a first memory cell, the first storage device 13 may detect an uncorrectable error in the corresponding data with an error correction code (ECC). An uncorrectable error with an ECC may mean an error state in which data cannot be recovered with a general error correction code, which may be caused by the loss of charge stored in a memory cell over time, or by an interference phenomenon by an adjacent memory cell.

In response to the detection of an uncorrectable error in operation S1002, the first storage device 13 may determine to execute a defense code for data recovery (S1010).

The defense code execution operation of operation S1050 may include a procedure for data recovery. For example, the defense code execution operation of operation S1050 may include a first operation of retrying reading while sequentially adjusting a read reference voltage of a memory cell to a plurality of levels based on determining to execute the defense code. The first operation may be a 'read-retry' mechanism, which is an operation of repeatedly trying until data is successfully read while adjusting the reference voltage in several operations, considering minute changes in the threshold voltage distribution, when data cannot be read at a standard read voltage level.

When data is successfully read through the retry of the first operation, the defense code execution operation of operation S1050 may include a second operation of storing the data read in another memory cell of the first storage device 13. For example, data successfully recovered through read-retry may be written to a memory cell located in another healthy block, not the memory cell where the error occurred. Through this, the risk of another read failure occurring when accessing the corresponding data in the future is reduced, and relatively stable data may be obtained.

According to some example embodiments described above with reference to FIG. 11, even if a situation such as an uncorrectable error occurs during the processing of a read request from a host, data loss can be reduced or limited through a data recovery procedure (for example, and immediate data recovery procedure). In addition, by performing another internal management operation in parallel in another storage device under the coordination of the host while the error recovery process is in progress, the effect of minimizing performance degradation of the system (e.g., the entire system) while responding to the error and improving the resilience and reliability of the storage system can be obtained.

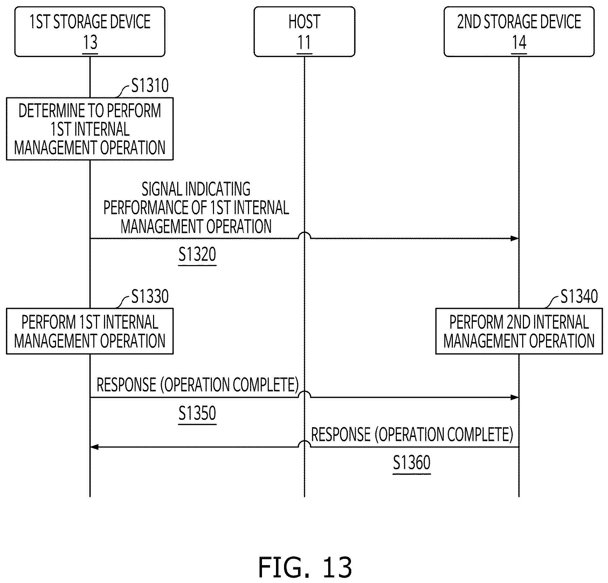

FIG. 12 is a diagram illustrating an example of a connection structure between storage devices in the storage system of FIG. 1. FIG. 13 is a sequence diagram illustrating an operation of a storage system according to the connection structure of FIG. 12. FIG. 13 may show an example of a case where a host does not intervene in the timing adjustment of internal management operations between storage devices according to the connection structure between the storage devices of FIG. 12, as an example of the operating method shown in FIG. 5. It is understood that additional operations can be provided before, during, and after the operations in FIG. 13, and some of the operations described below can be replaced or eliminated, for additional embodiments of the method. The order of the operations or processes may be interchangeable, or two or more operations can be performed simultaneously.

Referring to FIG. 1 and FIG. 12, the storage system 10 of FIG. 1 may further include a signal transmission line connected between the first storage device 13 and the second storage device 14 to transmit signals between the first storage device 13 and the second storage device 14.

The signal transmission line between the first storage device 13 and the second storage device 14 may include a physical wiring that directly connects a transmission terminal TX of the first storage device 13 and a reception terminal RX of the second storage device 14.

The signal transmission line between the first storage device 13 and the second storage device 14 may include a physical wiring that directly connects a transmission terminal TX of the second storage device 14 and a reception terminal RX of the first storage device 13.

For example, the signal transmission line between the first storage device 13 and the second storage device 14 may be implemented through a general-purpose input/output (GPIO) pin of each storage device, and may be used to transmit a pulse signal having a specific pattern or serial data according to a predetermined protocol.

The signal transmission line between the first storage device 13 and the second storage device 14 is shown as two lines in FIG. 12, but is not limited thereto, and signals may be transmitted and received between the first storage device 13 and the second storage device 14 through one line. Alternatively, signals between the first storage device 13 and the second storage device 14 may be transmitted and received through three or more lines. Alternatively, signals may be wirelessly transmitted and received between the first storage device 13 and the second storage device 14.

Referring to FIG. 13, the first storage device 13 may determine to perform a first internal management operation according to an internal condition (S1310). Operation S1310 of FIG. 13 may correspond to operation S510 of FIG. 5.

Thereafter, the first storage device 13, based on determining to perform the first internal management operation, may directly transmit information of having determined to perform the first internal management operation to the second storage device 14 through the signal transmission line (S1320). Operation S1320 of FIG. 13 may correspond to operation S520 of FIG. 5.

Since information or a signal is not transmitted through the host 11 in FIG. 13, information of having decided to perform the first internal management operation can be transmitted to another storage device with relatively reduced delay or load due to host intervention.

The first storage device 13, based on determining to perform the first internal management operation in operation S1310, may perform the first internal management operation (S1330). Operation S1330 of FIG. 13 may correspond to operation S530 of FIG. 5. The second storage device 14, in response to receiving the information in operation S1320, may perform at least a part of a second internal management operation in parallel with at least a part of the first internal management operation (S1340). Operation S1340 of FIG. 13 may correspond to operation S540 of FIG. 5.

Based on the completion of the first internal management operation of operation S1330, the first storage device 13 may transmit a response to the second storage device 14 notifying that the operation has been completed (S1350). Based on the completion of the second internal management operation of operation S1340, the second storage device 14 may transmit a response to the first storage device 13 notifying that the operation has been completed (S1360).

Additionally, when the first internal management operation of operation S1330 is completed, the first storage device 13 transmits a response to the host 11 notifying that the operation has been completed, and when the second internal management operation of operation S1340 is completed, the second storage device 14 may transmit a response to the host 11 notifying that the operation has been completed. Through this, the host 11 may recognize that the internal management operations of the first storage device 13 and the second storage device 14 have ended and may schedule other commands.

In some example embodiments, the first internal management operation may be a metadata flush operation. In this case, the first storage device 13 may determine whether to perform the operation by determining whether the size of the metadata stored in the volatile memory exceeds a flush limit (e.g., S710 of FIG. 7). If it is determined that the flush limit is exceeded, the first storage device 13 may directly transmit information for triggering the parallel execution of the internal management operation to the second storage device 14 through the signal transmission line of FIG. 12.

According to some example embodiments, by providing a dedicated signal line between the storage devices 13 and 14, the storage devices 13 and 14 can directly perform communication for coordinating internal management operations without the intervention of the host 11. This reduces the computational load of the host 11 and the overhead of related software, and reduces the delay time that may occur when passing through the host, enabling the parallel operation between the storage devices 13 and 14 to be initiated faster and more efficiently, thus bringing about the effect of improving the responsiveness and performance of the system (e.g., the entire system).

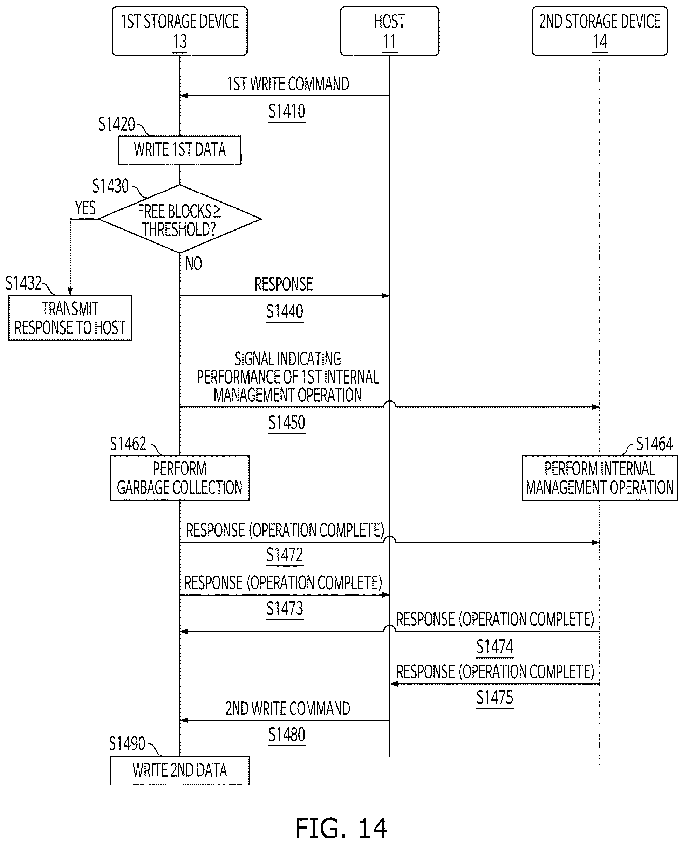

FIG. 14 is a sequence diagram illustrating a process in which a garbage collection operation is performed based on the connection structure of FIG. 12. The example embodiments described with reference to FIG. 14 may be an example for the garbage collection operation described with reference to FIG. 13. It is understood that additional operations can be provided before, during, and after the operations in FIG. 14, and some of the operations described below can be replaced or eliminated, for additional embodiments of the method. The order of the operations or processes may be interchangeable, or two or more operations can be performed simultaneously.

Referring to FIG. 14, the host 11 may transmit a first write command to the first storage device 13 (S1410), and the first storage device 13 may write data based on the first write command (S1420). The first storage device 13 may determine whether the number of internal free blocks is greater than or equal to a threshold value (S1430). Operation S1430 of FIG. 14 may correspond to operation S1310 of FIG. 13.

Based on the determination result of operation S1430, where it is determined that the number of free blocks is less than the threshold value, the first storage device 13 may decide to perform a garbage collection operation to increase the number of free blocks in the first storage device 13.

The first storage device 13 may transmit a response to the first write command to the host 11 to normally complete the data write transaction with the host (S1440).

Based on the determination result of operation S1430, where it is determined that the number of free blocks is less than the threshold value, the first storage device 13 may directly transmit information that causes the second storage device 14 to start a parallel internal management operation to the second storage device 14 through the signal transmission line of FIG. 12 (S1450). Operation S1450 of FIG. 14 may correspond to operation S1320 of FIG. 13.

The first storage device 13 may perform a garbage collection operation (S1462). Operation S1462 of FIG. 14 may correspond to operation S1330 of FIG. 13.

The second storage device 14 that received the signal of operation S1450 may perform an internal management operation (S1464). Operation S1464 of FIG. 14 may correspond to operation S1340 of FIG. 13. At least a part of the internal management operation of the second storage device 14 in operation S1464 may proceed in parallel with at least a part of the garbage collection operation of the first storage device 13 in operation S1462.

When the garbage collection operation of the first storage device 13 in operation S1462 is completed, the first storage device 13 may transmit an operation completion response to the second storage device 14 (S1472). When the garbage collection operation of the first storage device 13 in operation S1462 is completed, additionally, the first storage device 13 may transmit an operation completion response to the host 11 (S1473).

When the internal management operation of the second storage device 14 in operation S1464 is completed, the second storage device 14 may transmit an operation completion response to the first storage device 13 (S1474). When the internal management operation of the second storage device 14 in operation S1464 is completed, additionally, the second storage device 14 may transmit an operation completion response to the host 11 (S1475).

Thereafter, the host 11 may transmit a second write command to the first storage device 13 (S1480). The first storage device 13 receives the second write command and may write second data (S1490). As garbage collection is performed in operation S1462, a sufficient or desired number of free blocks may be secured to write the second data in operation S1490.

According to some example embodiments described above with reference to FIG. 14, since the parallel execution of internal management operations between storage devices 13 and 14 is performed through direct signal transmission between devices without host intervention or load, the resources of the system are efficiently utilized, and the performance degradation may be proactively reduced.

Alternatively, after recognizing the shortage of free blocks, the first storage device 13 may first transmit a signal to the second storage device 14 (S1450) and then transmit a write completion response to the host 11 (S1440). The order of the two operations may vary depending on the implementation method.

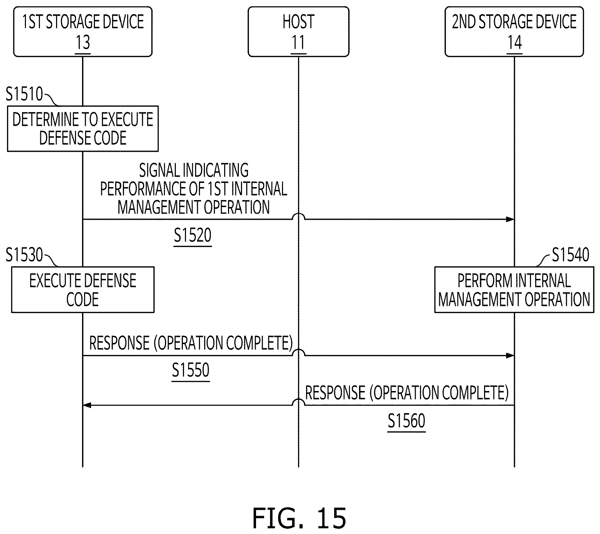

FIG. 15 is a sequence diagram illustrating a process of executing a defense code based on the connection structure of FIG. 12. The embodiment described with reference to FIG. 15 may be an example for the defense code execution operation described with reference to FIG. 13. Hereinafter, contents that overlap with the description given with reference to FIG. 10 may be omitted. It is understood that additional operations can be provided before, during, and after the operations in FIG. 15, and some of the operations described below can be replaced or eliminated, for additional embodiments of the method. The order of the operations or processes may be interchangeable, or two or more operations can be performed simultaneously. The sequence diagram of FIG. 15 may be same as or similar in some respects to the sequence diagram of FIG. 10, and therefore may be best understood with reference thereto.

Referring to FIG. 15, the first storage device 13 may decide to execute a defense code according to an internal judgment (S1510). Operation S1510 of FIG. 15 may correspond to operation S1310 of FIG. 13. The decision of operation S1510 may be made, for example, to proactively check the reliability of stored data when the first storage device 13 has been in an idle state for a certain period of time.

Based on deciding to execute the defense code in operation S1510, the first storage device 13 may directly transmit information indicating that a defense code is being executed (or, information that an internal management operation is being executed) to the second storage device 14 through the signal transmission line (S1520). Operation S1520 of FIG. 15 may correspond to operation S1320 of FIG. 13. The signal of operation S1520 may trigger the second storage device 14 to perform an internal management operation in parallel with the defense code execution operation of the first storage device 13.

The first storage device 13 may perform an operation of executing a defense code as a first internal management operation (S1530). Operation S1530 of FIG. 15 may correspond to operation S1330 of FIG. 13. The operation of operation S1530 may include a process of maintaining data integrity by checking for errors through periodic data reading and re-writing the data if necessary (e.g., data scrubbing), as described in connection with the embodiment of FIG. 10.

The second storage device 14, after receiving the signal of operation S1520, may perform a second internal management operation in parallel with the operation of operation S1530 (S1540). Operation S1540 of FIG. 15 may correspond to operation S1340 of FIG. 13.

The first storage device 13, based on completing the first internal management operation, may transmit a first completion signal to the second storage device 14 through the signal transmission line (S1550). Operation S1550 of FIG. 15 may correspond to operation S1350 of FIG. 13.

The second storage device 14, based on completing the second internal management operation, may transmit a second completion signal to the first storage device 13 through the signal transmission line (S1560). Operation S1560 of FIG. 15 may correspond to operation S1360 of FIG. 13.

According to some example embodiments, the method allows the first and second storage devices 13 and 14 to synchronize each other's work completion status in real time (or near real time), for example, if one storage device finishes its work first, it can wait until the other storage device finishes and then transition to the next state together, enabling more sophisticated cooperative operations. In addition, the autonomy of the system can be further improved by excluding (or with limited or reduced) the involvement of the host 11. Additionally or alternatively, when each internal management operation is completed, the first and second storage devices 13 and 14 may each transmit a response to the host 11 notifying of the completion of the operation.

According to some example embodiments described with reference to FIG. 15, by performing an internal management operation in parallel with another storage device directly without the intervention of the host 11, the load on the host 11 can be reduced while improving the long-term stability and data integrity of the storage system.

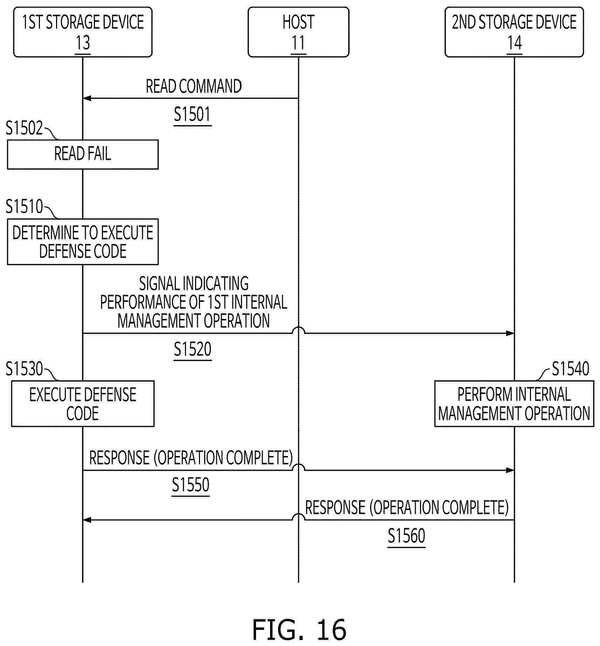

FIG. 16 is a sequence diagram illustrating a process of executing a defense code upon a read fail based on the connection structure of FIG. 12. Hereinafter, contents that overlap with the description given with reference to FIG. 11 and FIG. 15 may be omitted. It is understood that additional operations can be provided before, during, and after the operations in FIG. 16, and some of the operations described below can be replaced or eliminated, for additional embodiments of the method. The order of the operations or processes may be interchangeable, or two or more operations can be performed simultaneously. The sequence diagram of FIG. 16 may be same as or similar in some respects to the sequence diagram of FIGS. 11 and 15, and therefore may be best understood with reference thereto.

Referring to FIG. 16, the operation may be initiated in a situation where the first storage device 13 detects an uncorrectable read fail with ECC for a read command from the host 11.

In response to the read fail, the first storage device 13 may decide or determine to execute a defense code for data recovery (S1510). Based on deciding to execute the defense code, the first storage device 13 may directly transmit a signal indicating information that a defense code is being executed (or, that an internal management operation is being executed) to the second storage device 14 through the signal transmission line (S1520). The signal indicating the information that the defense code is being executed is directly delivered to the second storage device 14 without passing through the host 11, and may be used as a trigger for the parallel execution of the internal management operation.

Here, the defense code execution operation (S1530) may include a data recovery and re-write process of re-trying reading while adjusting the read reference voltage and re-storing the successfully read data in another safe memory cell, as described in connection with the example embodiments of FIG. 11.

According to some example embodiments described above with reference to FIG. 16, even if an error such as a read fail occurs, the storage device autonomously initiates a data recovery procedure, and at the same time, cooperates with another storage device directly without the intervention of the host 11 (or with limited or reduced intervention of the host 11) to efficiently utilize system resources, thereby reducing the computational load of the host 11 while improving the reliability of the system.

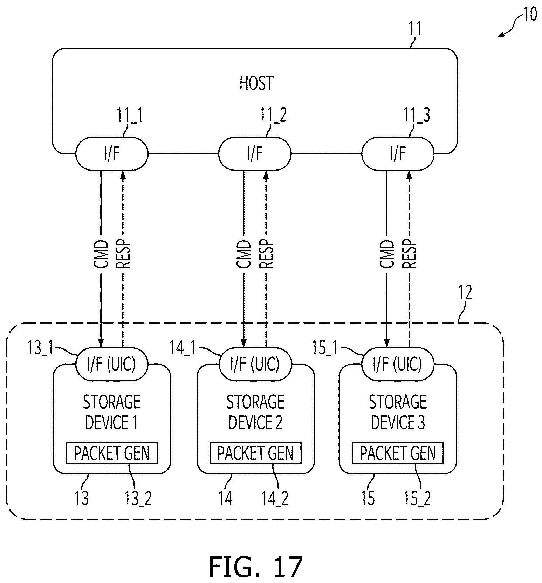

FIG. 17 is a block diagram illustrating a configuration of a storage system including three or more storage devices according to some example embodiments of the present disclosure. The storage system of FIG. 17 may be same as or similar in some respects to the storage system 10 shown in FIG. 1, and may indicate that some example embodiments of the present disclosure can be applied to a system having three or more storage devices.

Referring to FIG. 17, the storage system 10 may include a first storage device 13, a second storage device 14, a third storage device 15, and a host 11 connected to these devices. Although three storage devices are shown in the drawing, this is merely an example, and the number of storage devices may be any integer of 3 or more.

In such a multi-device environment, the first storage device 13 may determine whether to perform a first internal management operation, and based on that decision, may perform the first internal management operation. In conjunction with this, the second storage device 14, based on the decision of the first storage device 13, receives information that the first storage device 13 is performing the first internal management operation, and in response, may perform a second internal management operation. In addition, the third storage device 15, based on the decision of the first storage device 13, receives information that the first storage device 13 is performing the first internal management operation, and in response, may perform a third internal management operation.

At this time, two or more of the first, second, and third internal management operations may be performed in parallel with each other in at least some sections. For example, while the first storage device 13 performs garbage collection, the second storage device 14 and the third storage device 15 may simultaneously perform metadata flush and data scrubbing, respectively, such that all three internal management operations are performed in parallel. Alternatively, only some devices may selectively participate in the parallel operation, such as only the second storage device 14 performing a parallel operation while the first storage device 13 is operating, and the third storage device 15 maintaining an idle state.

This multi-device parallel operation may be implemented through the methods according to some example embodiments described above. When implemented based on the example embodiment described with reference to FIG. 6 to FIG. 11, the first storage device 13 may notify the host 11 of performing internal management operation. The host 11 may transmit a command requesting an internal management operation to the second and/or third storage devices 14 and 15. The host 11 may transmit a command requesting an internal management operation to the second and/or third storage devices 14 and 15, taking into account the current state (e.g., load, whether idle, etc.). The host 11 may select a storage device to perform the internal management operation and transmit a command requesting the internal management operation.

In some example embodiments, when the multi-device parallel operation is implemented based on example embodiments described with reference to FIG. 12 to FIG. 16, the first storage device 13 may be connected to the second and third storage devices 14 and 15 by dedicated signal lines respectively, or all storage devices may be connected by a common bus line that is shared. When the first storage device 13 decides on or determines an internal management operation, the first storage device 13 may directly broadcast or multicast this information to the other devices through the signal line. Each storage device that receives the signal may autonomously decide whether to perform an internal management operation itself according to a predefined or desired or given policy.

According to some example embodiments, in a system including three or more storage devices, the idle resources of the remaining several devices can be utilized simultaneously while one storage device performs an internal management operation. This reduces or limits the idle time of the system (e.g., the entire system) and improves the throughput of background tasks, which can improve overall performance and reliability, in storage systems having relatively larger capacity or higher performance (e.g., enterprise SSDs, RAID systems).

According to some example embodiments, a method includes transmitting, by a host of a storage system, a first write command to a first storage device of the storage system for writing data to the first storage device; receiving, at the first storage device, the first write command from the host; writing first data in the first storage device; determining, by the first storage device, a number of free blocks within the first storage device; in response to the number of free blocks being less than a threshold value, transmitting a response to the host to request a garbage collection operation to be performed on the first storage device; receiving, by the first storage device, a first command from the host to perform the garbage collection operation; performing, by the first storage device, the garbage collection operation in response to receiving the first command; and transmitting, to the host, a first completion response indicating a completion of the garbage collection operation. According to some example embodiments, the method further includes transmitting, by the host, a second command for requesting an internal management operation to a second storage device of the storage system; performing, by the second storage device, the internal management operation at least partly in parallel with the garbage collection operation of the first storage device in response to receiving the second command; and transmitting a second completion response indicating a completion of the internal management operation to the host. According to some example embodiments, the storage system further includes a first signal transmission line that is connected between the first storage device and the second storage device and that is configured to transmit one or more signals between the first storage device and the second storage device, and the method further includes transmitting, by the first storage device, first information to the second storage device through the first signal transmission line, the first information triggering the internal management operation of the second storage device based on the response to the host to request the garbage collection operation. According to some example embodiments, the method further comprising transmitting, by the host, a second write command to the first storage device in response to the first completion response. According to some example embodiments, the internal management operation comprises at least one of a metadata flush operation or a garbage collection operation for the second storage device.

As described herein, any devices, systems, modules, portions, units, controllers, circuits, and/or portions thereof according to any of the example embodiments, and/or any portions thereof (including, without limitation, the host 11, the first storage device 13, the second storage device 14, the third storage device 15, the first packet generator 13_2, the second packet generator 14_2, the host memory 101, the host controller 110, the memory control unit 120, the processor 130, the modem 140, the camera interface 150, the display interface 160, the embedded memory 170, the storage devices 1,..., N, the memory controller 200, the memory core 300, the host interface 210, the processor 220, the RAM 230, the packet manager 240, the memory interface 250, the software module 410, the UFS host controller 420, the host memory 430, the UFS storage device 440, any portion thereof, or the like) may include, may be included in, and/or may be implemented by one or more instances of processing circuitry such as hardware including logic circuits; a hardware/software combination such as a processor executing software; or a combination thereof. For example, the processing circuitry more specifically may include, but is not limited to, a central processing unit (CPU), an arithmetic logic unit (ALU), a graphics processing unit (GPU), an application processor (AP), a digital signal processor (DSP), a microcomputer, a field programmable gate array (FPGA), a System-on-Chip (SoC), a programmable logic unit, a microprocessor, application-specific integrated circuit (ASIC), a neural network processing unit (NPU), an Electronic Control Unit (ECU), an Image Signal Processor (ISP), and the like. In some example embodiments, the processing circuitry may include a non-transitory computer readable storage device (e.g., a memory), for example a solid state drive (SSD), storing a program of instructions, and a processor (e.g., CPU) configured to execute the program of instructions to implement the functionality and/or methods performed by some or all of any devices, systems, modules, portions, units, controllers, circuits, and/or portions thereof according to any of the example embodiments. The processing circuitry may include electrical components such as at least one of transistors, resistors, capacitors, etc. The processing circuitry may include electrical components such as logic gates including at least one of AND gates, OR gates, NAND gates, NOT gates, etc.

While several embodiments have been provided in the present disclosure, it should be understood that the disclosed systems and methods might be embodied in many other specific forms without departing from the scope of the appended claims.

## Claims

1. A storage system, comprising:
a first storage device (13) ; and
a second storage device (14),
wherein the first storage device (13) is configured to,
determine (S510) whether to perform a first internal management operation associated with the first storage device (13), and
perform (S530) the first internal management operation in response to determining to perform the first internal management operation, and
wherein the second storage device (14) is configured to,
receive (S520) first information that triggers an internal management operation of the second storage device (14) based on the first storage device (13) determining to perform the first internal management operation, and
perform (S540) a second internal management operation at least partly in parallel with the first internal management operation in response to receiving the first information.

2. The storage system as claimed in claim 1, wherein the storage system further comprises a first signal transmission line that is connected between the first storage device (13) and the second storage device (14) and that is configured to transmit one or more signals between the first storage device (13) and the second storage device (14), and
wherein the first storage device (13) is configured to transmit (S1320) the first information to the second storage device (14) through the first signal transmission line in response to determining to perform the first internal management operation.

3. The storage system as claimed in claim 2, wherein the first storage device (13) comprises a volatile memory (230) and a non-volatile memory (300),
wherein the first storage device (13) is configured to,
store, in the volatile memory (230), metadata that maps a logical address associated with the first storage device (13) to a physical address of the first storage device (13),
determine whether to perform the first internal management operation by determining (S710) whether a size of the metadata stored in the volatile memory (230) exceeds a flush limit managed by the first storage device (13), and
transmit the first information to the second storage device (14) in response to determining that the size of the metadata stored in the volatile memory (230) exceeds the flush limit, and
wherein the first internal management operation comprises a metadata flush operation of flushing the metadata stored in the volatile memory (230) to the non-volatile memory (300).

4. The storage system as claimed in claim 2, wherein the first storage device (13) is configured to:
determine whether to perform the first internal management operation by determining (S1430) whether a number of free blocks within the first storage device (13) is greater than or equal to a threshold value, and
transmit (S1450) the first information to the second storage device (14) in response to determining the number of free blocks to be less than the threshold value, and
wherein the first internal management operation comprises a garbage collection operation in the first storage device (13) to increase the number of free blocks within the first storage device (13).

5. The storage system as claimed in any one of claims 2 to 4, wherein the first storage device (13) is configured to:
transmit (S1472) a first completion signal indicating a completion of the first internal management operation to the second storage device (14) through the first signal transmission line in response to completing the first internal management operation, and
wherein the second storage device (14) is configured to transmit (S1474) a second completion signal indicating a completion of the second internal management operation to the first storage device (13) through the first signal transmission line in response to completing the second internal management operation.

6. The storage system as claimed in any one of claims 2 to 5, wherein the storage system further comprises:
a third storage device (15); and
a second signal transmission line that is connected between the first storage device (13) and the third storage device (15) and is configured to transmit signals between the first storage device (13) and the third storage device (15),
wherein the first storage device (13) is configured to transmit second information that triggers a third internal management operation of the third storage device (15) to the third storage device (15) through the second signal transmission line in response to determining to perform the first internal management operation, and
wherein the third storage device (15) is configured to,
receive the second information, and
perform the third internal management operation at least partly in parallel with the first internal management operation in response to receiving the second information.

7. The storage system as claimed in any one of claims 1 to 6, wherein the second storage device (14) is configured to perform the second internal management operation at least partly in parallel with the first internal management operation in response to receiving the first information after an operation being executed by the second storage device (14) is completed.

8. The storage system as claimed in any one of claims 1 to 7, wherein the second internal management operation comprises at least one of a metadata flush operation or a garbage collection operation for the second storage device (14),
wherein the first information comprises information about a type of the first internal management operation, and
wherein the second storage device (14) is configured to determine at least one of the metadata flush operation or the garbage collection operation as the second internal management operation based on the information about the type of the first internal management operation.

9. The storage system according to claim 1, comprising a host (11) connected to the first storage device (13) and the second storage device (14).

10. The storage system as claimed in claim 9, wherein the first storage device (13) is configured to:
transmit (S620, S840) second information indicating a decision to perform the first internal management operation to the host (11) in response to determining to perform the first internal management operation,
wherein the host (11) is configured to:
transmit (S630, S852), to the first storage device (13), a first command requesting the first storage device (13) to perform the first internal management operation in response to receiving the second information, and
transmit (S640, S854) a second command comprising the first information to the second storage device (14) in response to receiving the second information,
wherein the first storage device (13) is configured to perform (S650, S862) the first internal management operation based on receiving the first command, and
wherein the second storage device (14) is configured to perform (S660, S864) the second internal management operation based on receiving the second command.

11. The storage system as claimed in claim 10, wherein the first storage device (13) is configured to:
transmit (S872) a first response notifying a completion of the first internal management operation to the host (11) in response to completing the first internal management operation, and
wherein the second storage device (14) is configured to transmit (S874) a second response notifying a completion of the second internal management operation to the host (11) in response to completing the second internal management operation.

12. The storage system as claimed in claim 10 or 11, wherein the first storage device (13) comprises a volatile memory (230) and a non-volatile memory (300),
wherein the first storage device (13) is configured to,
store, in the volatile memory (230), metadata that maps a logical address associated with the first storage device (13) to a physical address of the first storage device (13),
determine whether to perform the first internal management operation by determining (S710) whether a size of the metadata stored in the volatile memory (230) exceeds a flush limit managed by the first storage device (13), and
transmit the second information to the host (11) in response to determining that the size of the metadata stored in the volatile memory (230) exceeds the flush limit, and
wherein the first internal management operation comprises a metadata flush operation of flushing the metadata stored in the volatile memory (230) to the non-volatile memory (300).

13. The storage system as claimed in claim 10 or 11, wherein the first storage device (13) is configured to:
determine whether to perform the first internal management operation by determining (S830) whether a number of free blocks within the first storage device (13) is greater than or equal to a threshold value, and
transmit the second information to the host (11) in response to determining the number of free blocks to be less than the threshold value, and
wherein the first internal management operation comprises a garbage collection operation in the first storage device (13) to increase the number of free blocks within the first storage device (13),
wherein the host (11) is configured to transmit (S810), to the first storage device (13), a write command for writing data to the first storage device (13),
wherein the first storage device (13) is configured to,
write (S820) the data and determine (S830) whether the number of free blocks within the first storage device (13) is greater than or equal to the threshold value in response to receiving the write command, and
transmit (S840) a response to the host (11), the response corresponding to the write command and comprising the second information, in response to determining that the number of free blocks is less than the threshold value and completing the writing of the data,
and
wherein the host (11) is further configured to transmit (S852) the first command to the first storage device (13) and transmit (S854) the second command to the second storage device (14) in response to receiving the response.

14. The storage system as claimed in any one of claims 10 to 13, wherein the first information comprises information about a type of the first internal management operation, and
wherein the second storage device (14) is configured to determine at least one of a metadata flush operation or a garbage collection operation as the second internal management operation in response to the information about the type of the first internal management operation.

15. The storage system as claimed in any one of claims 10 to 14, wherein the storage system further comprises a third storage device (15),
wherein the host (11) is configured to transmit, to the third storage device (15), a third command requesting to perform a third internal management operation in response to receiving the second information, and
wherein the third storage device (15) is configured to,
receive the third command, and
perform the third internal management operation at least partly in parallel with the first internal management operation in response to receiving the third command.

## Amended claims

### Amended claims in accordance with Rule 137(2) EPC.

1. A storage system, comprising:
a first storage device (13) ; and
a second storage device (14),
wherein the first storage device (13) is configured to,
determine (S510) whether to perform a first internal management operation associated with the first storage device (13), and
perform (S530) the first internal management operation in response to determining to perform the first internal management operation, and
wherein the second storage device (14) is configured to,
receive (S520) first information that triggers an internal management operation of the second storage device (14) based on the first storage device (13) determining to perform the first internal management operation, and
perform (S540) a second internal management operation at least partly in parallel with the first internal management operation in response to receiving the first information,
wherein the storage system further comprises a first signal transmission line that is connected between the first storage device (13) and the second storage device (14) and that is configured to transmit one or more signals between the first storage device (13) and the second storage device (14), and
wherein the first storage device (13) is configured to transmit (S1320) the first information to the second storage device (14) through the first signal transmission line in response to determining to perform the first internal management operation,
wherein the first storage device (13) comprises a volatile memory (230) and a non-volatile memory (300),
wherein the first storage device (13) is configured to,
store, in the volatile memory (230), metadata that maps a logical address associated with the first storage device (13) to a physical address of the first storage device (13),
determine whether to perform the first internal management operation by determining (S710) whether a size of the metadata stored in the volatile memory (230) exceeds a flush limit managed by the first storage device (13), and
transmit the first information to the second storage device (14) in response to determining that the size of the metadata stored in the volatile memory (230) exceeds the flush limit, and
wherein the first internal management operation comprises a metadata flush operation of flushing the metadata stored in the volatile memory (230) to the non-volatile memory (300).

2. The storage system as claimed in claim 1, wherein the first storage device (13) is configured to:
transmit (S1472) a first completion signal indicating a completion of the first internal management operation to the second storage device (14) through the first signal transmission line in response to completing the first internal management operation, and
wherein the second storage device (14) is configured to transmit (S1474) a second completion signal indicating a completion of the second internal management operation to the first storage device (13) through the first signal transmission line in response to completing the second internal management operation.

3. The storage system as claimed in claim 1 or 2, wherein the storage system further comprises:
a third storage device (15); and
a second signal transmission line that is connected between the first storage device (13) and the third storage device (15) and is configured to transmit signals between the first storage device (13) and the third storage device (15),
wherein the first storage device (13) is configured to transmit second information that triggers a third internal management operation of the third storage device (15) to the third storage device (15) through the second signal transmission line in response to determining to perform the first internal management operation, and
wherein the third storage device (15) is configured to,
receive the second information, and
perform the third internal management operation at least partly in parallel with the first internal management operation in response to receiving the second information.

4. The storage system as claimed in any one of claims 1 to 3, wherein the second storage device (14) is configured to perform the second internal management operation at least partly in parallel with the first internal management operation in response to receiving the first information after an operation being executed by the second storage device (14) is completed.

5. The storage system as claimed in any one of claims 1 to 4, wherein the second internal management operation comprises at least one of a metadata flush operation or a garbage collection operation for the second storage device (14),
wherein the first information comprises information about a type of the first internal management operation, and
wherein the second storage device (14) is configured to determine at least one of the metadata flush operation or the garbage collection operation as the second internal management operation based on the information about the type of the first internal management operation.

6. The storage system as claimed in claim 1, comprising a host (11) connected to the first storage device (13) and the second storage device (14).
